# EUROPEAN PATENT SPECIFICATION

(11) **EP 3 878 733 B1**
(45) Date of publication and mention of the grant of the patent: **25.12.2024**
(21) Application number: 21162147.9
(22) Date of filing: 11.03.2021
(51) Int. Cl.: B64C 1/14, B64D 11/04

(54) **LINEAR ACTUATOR LATCH MECHANISM SYSTEM FOR VEHICLE**
LINEARES AKTUATORSPERRMECHANISMUSSYSTEM FÜR EIN FAHRZEUG
SYSTÈME DE MÉCANISME DE VERROUILLAGE À ACTIONNEUR LINÉAIRE POUR VÉHICULE

(30) Priority: 13.03.2020 US 202016818076
(43) Date of publication of application: 15.09.2021
(73) Proprietor: Koninklijke Fabriek Inventum B.V., 3439 MG Nieuwegein (NL)
(72) Inventor: PANJER, Frederik A.S., 3953BW Maa Maarsbergen (NL)
(74) Representative: Dehns

(56) References cited:
- EP-A1- 3 372 502
- EP-A2- 1 270 405
- DE-A1- 102014 114 915
- DE-A1- 102018 200 141
- US-A1- 2008 071 398
- US-A1- 2009 242 699
- US-A1- 2011 174 170
- US-A1- 2018 051 502

## Description

### BACKGROUND

Door latches for aircraft galley insert doors currently are manually latched. Crew members currently spend significant time latching doors during taxi, takeoff, turbulence, and landing.
US 2011 174170 A1 discloses a trash compactor for use in vehicles such as aircraft. EP 3 372 502 A1 discloses an electronic control system for stowage bins in interior cabins. US 2008 071398 A1 and US 2009 242699 A1 disclose various methods and systems for controlling compartments. DE 10 2014 114915 A1 discloses a locking device for overhead luggage storage compartments in aircraft cabins. US 2018 051502 A1 discloses a power door latching feature for motor vehicles.

### SUMMARY

According to the first aspect, there is provided a system according to claim 1.

### BRIEF DESCRIPTION OF THE DRAWINGS

Implementations of the inventive concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is a view of an exemplary embodiment of a system in according to the inventive concepts disclosed herein.
FIG. 2 is a view of an exemplary embodiment of an aircraft galley of the system of FIG. 1 according to the inventive concepts disclosed herein.
FIG. 3 is a view of an exemplary embodiment of an aircraft galley of the system of FIG. 1 according to the inventive concepts disclosed herein.
FIG. 4 is a view of an exemplary embodiment of an aircraft galley of the system of FIG. 1 according to the inventive concepts disclosed herein.
FIG. 5 is a view of an exemplary embodiment of a door of the system of FIG. 1 according to the inventive concepts disclosed herein.
FIG. 6 is a view of an exemplary embodiment of a door of the system of FIG. 1 according to the inventive concepts disclosed herein.
FIG. 7 is a view of an exemplary embodiment of a portion of a door of the system of FIG. 1 according to the inventive concepts disclosed herein.
FIG. 8 is a view of an exemplary embodiment of a portion of a door of the system of FIG. 1 according to the inventive concepts disclosed herein.
FIG. 9 is a view of an exemplary embodiment of an aircraft galley insert of the system of FIG. 1 according to the inventive concepts disclosed herein.
FIG. 10 is a view of an exemplary embodiment of an aircraft galley insert of the system of FIG. 1 according to the inventive concepts disclosed herein.
FIG. 11 is a view of an exemplary embodiment of a portion of an aircraft galley insert of the system of FIG. 1 according to the inventive concepts disclosed herein.
FIG. 12 is a view of an exemplary embodiment of an aircraft galley insert of the system of FIG. 1 according to the inventive concepts disclosed herein.
FIG. 13 is a view of an exemplary embodiment of a portion of an aircraft galley insert of the system of FIG. 1 according to the inventive concepts disclosed herein.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein are directed to a system including an aircraft galley insert oven door and an electronically actuated linear actuator latch mechanism configured to cause the door to be in a latched state and to cause the door to be in an unlatched state. The door and an electronically actuated linear actuator latch mechanism are installed in an aircraft. A computing device is configured to control whether the electronically actuated linear actuator latch mechanism causes the door to be in a latched state or to be in an unlatched state. Additionally, the computing device may be configured to present information related to the state(s) of one or more doors having one or multiple electronically actuated linear actuator latch mechanisms and, optionally, one or multiple primary latch mechanisms, and the computing device may be configured to receive user inputs to change latched or unlatched state(s) of one, some, or all of the doors. Further, the computing device is configured to control whether the electronically actuated linear actuator latch mechanism is in a latched state or an unlatched state based at least on an aircraft state, such as taxi, takeoff, turbulence, and/or landing.

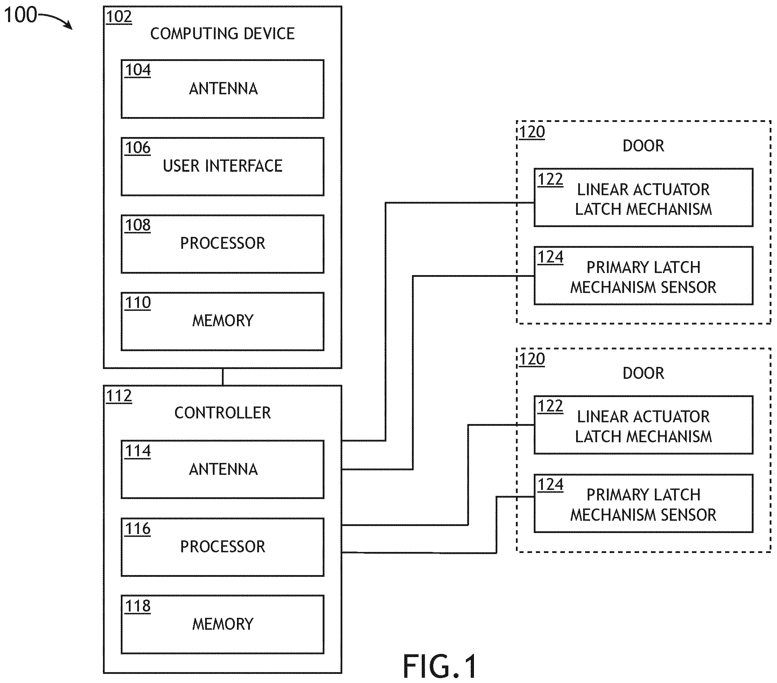

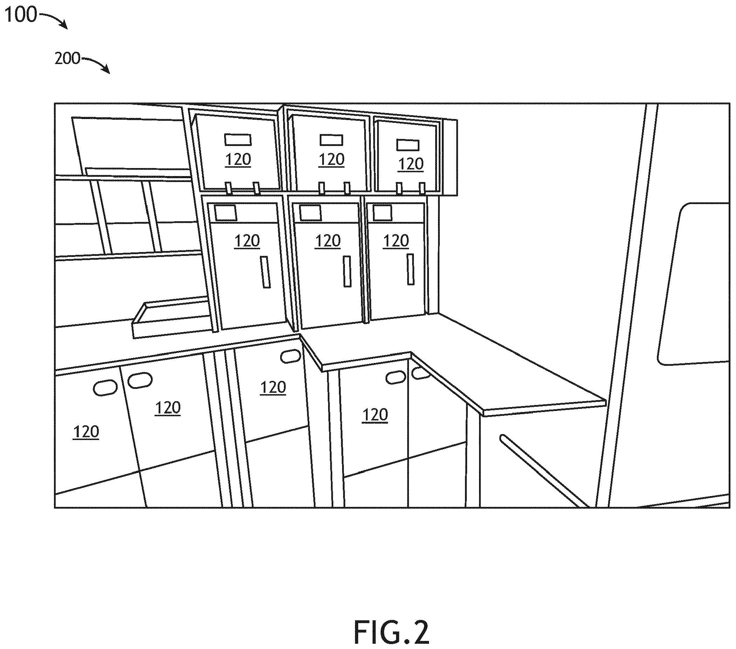

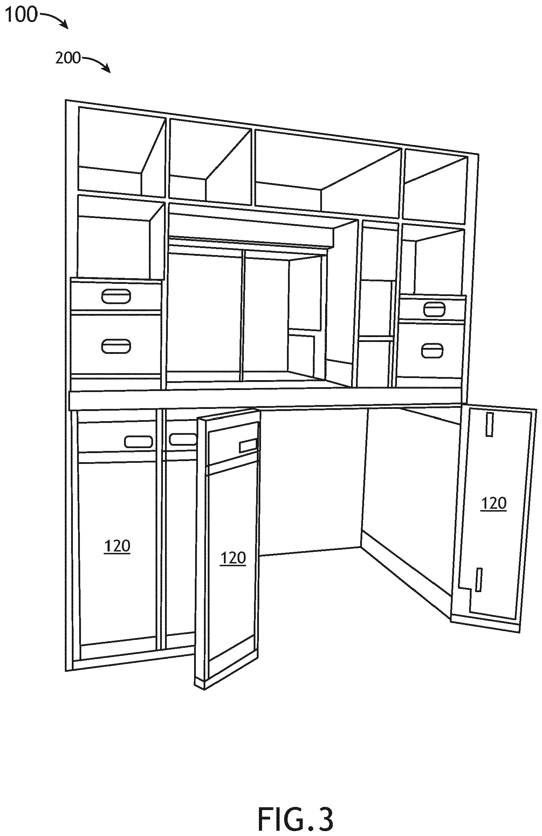

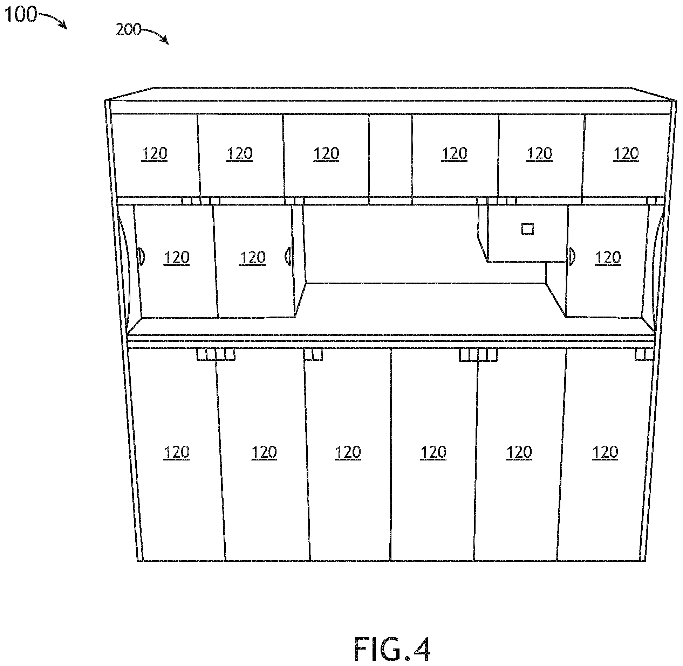

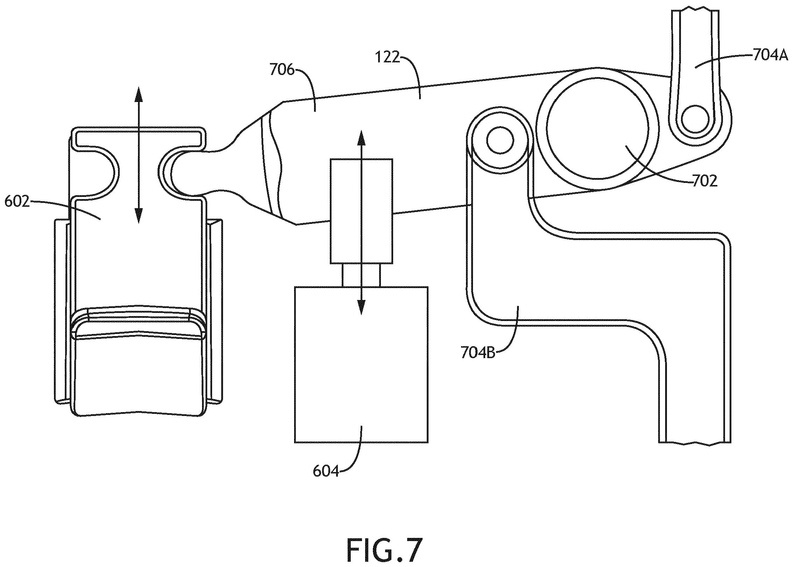

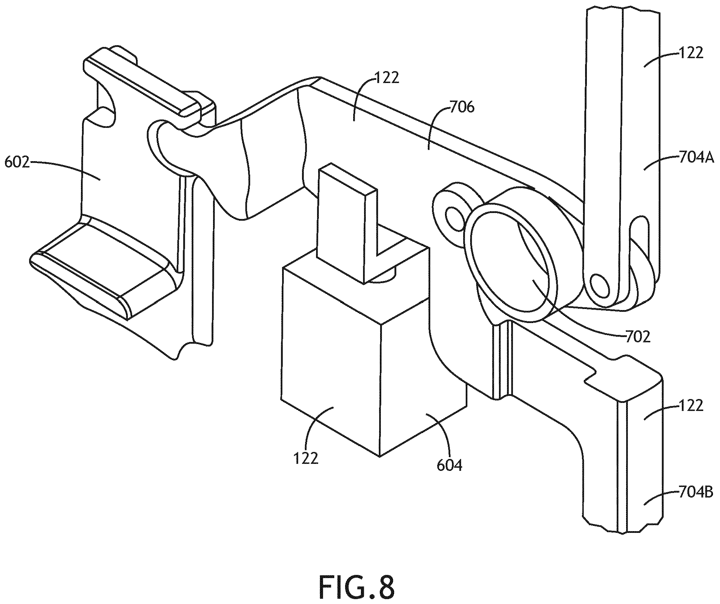

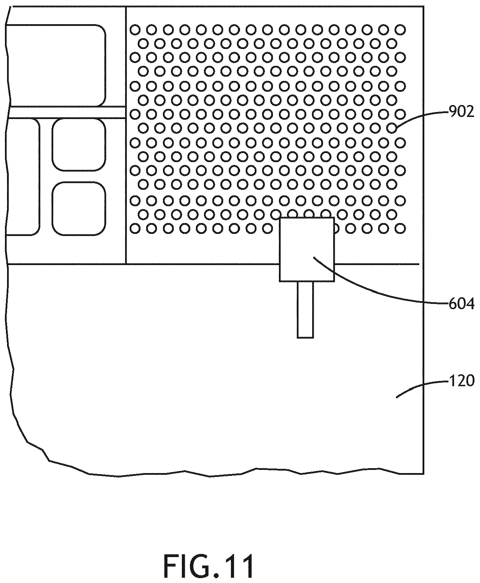

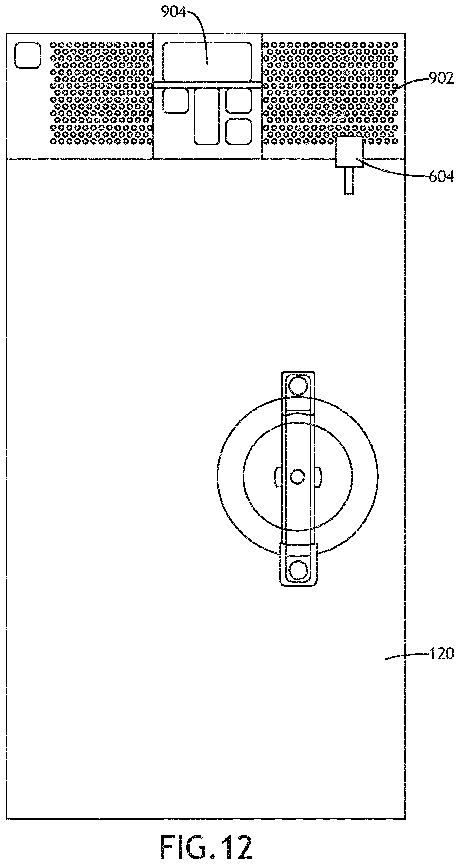

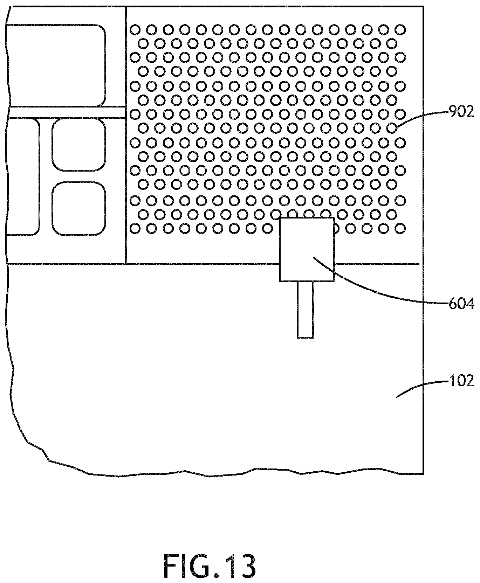

Referring now to FIGS. 1-13, exemplary embodiments of a system including an aircraft 100 are depicted according to the inventive concepts.

The aircraft 100 may include at least one aircraft galley 200, at least one computing device 102, at least one controller 112, at least one door 120, at least one linear actuator latch mechanism 122, and/or at least one primary latch mechanism sensor 124, some or all of which may be communicatively coupled (e.g., wiredly communicatively coupled or wirelessly communicatively coupled; e.g., directly communicatively coupled and/or communicatively coupled via an intermediate communicatively coupled device) at any given time.

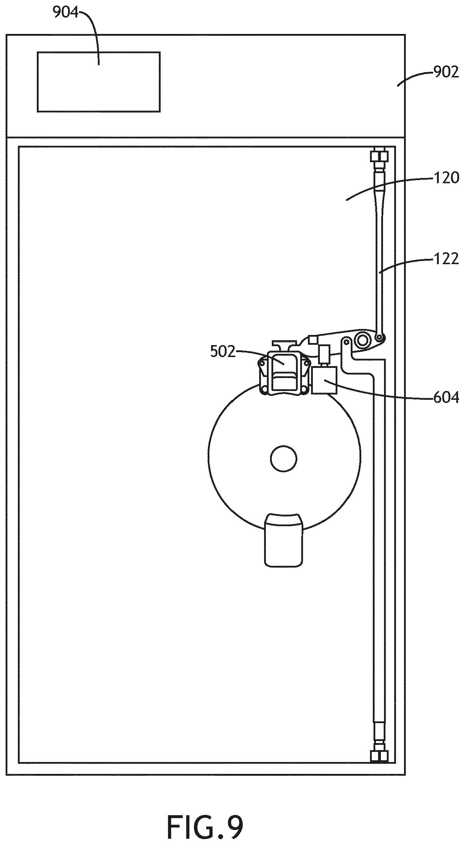

The aircraft galley 200 includes an aircraft galley insert oven, and may include other components commonly found in galleys. The aircraft galley insert oven includes a door 120, at least one linear actuator latch mechanism 122, and/or at least one primary latch mechanism sensor 124. Each of such aircraft galley insert oven may include at least one door 120, a housing 902 (as shown in FIG. 9), a user interface 904 (as shown in FIG. 9), at least one controller 112, at least one linear actuator latch mechanism 122, and/or at least one primary latch mechanism sensor 124, some or all of which may be communicatively coupled with one or more components of the system.

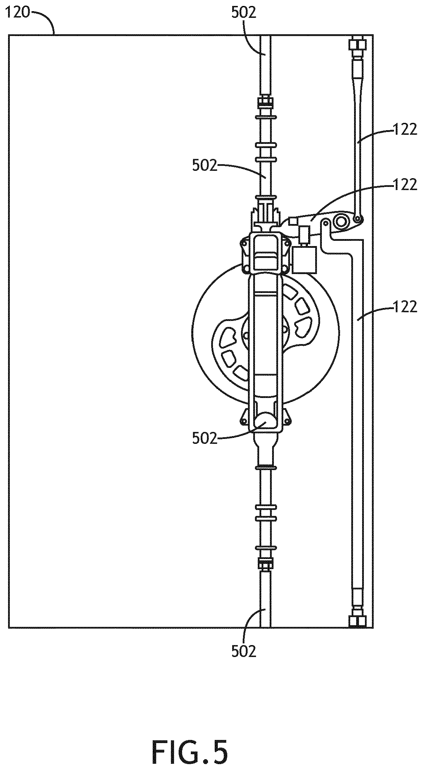

The doors 120 is installed in the aircraft 100. In some embodiments, the door 120 may include a primary latch mechanism 502 (as shown in FIGS. 5 and 9-10), at least one controller 112, at least one linear actuator latch mechanism 122, and/or at least one primary latch mechanism sensor 124; however, in some embodiments, some of such components (e.g., at least one linear actuator latch mechanism 122, at least one controller 112, and/or at least one primary latch mechanism sensor 124) may be installed outside of the door 120 (e.g., in proximity to the door 120).

The primary latch mechanism sensor 124 may be configured to detect whether the door 120 is in a latched state or an unlatched state and to output state data to the controller 112 and/or the computing device 102. In some embodiments, the primary latch mechanism sensor 124 may be configured to detect whether the door 120 is in an open state or a closed state and to output door state data to the controller 112 and/or the computing device 102.

In some embodiments, the primary latch mechanism 502 may be the primary way in which a user unlatches the door 120 to open the door 120. The primary latch mechanism 502 may include a manual latch actuator 602 that may be manipulated by a user to latch or unlatch the door 120. In some embodiments, a primary latch mechanism sensor 124 may be configured to detect whether the primary latch mechanism 502 is in a primary latch latched state or a primary latch unlatched state. The primary latch mechanism 502 may be (a) installed in or on the door 102 or (b) installed within the aircraft 100 in proximity to the door 120, the primary latch mechanism sensor 124 communicatively coupled to the computing device 102 and/or the controller 112.

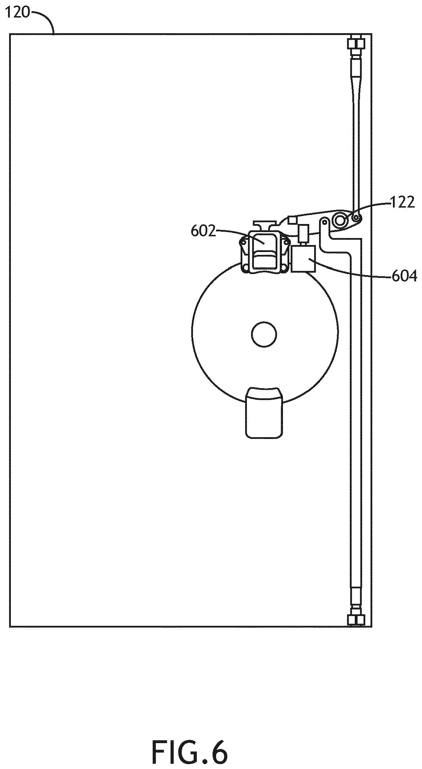

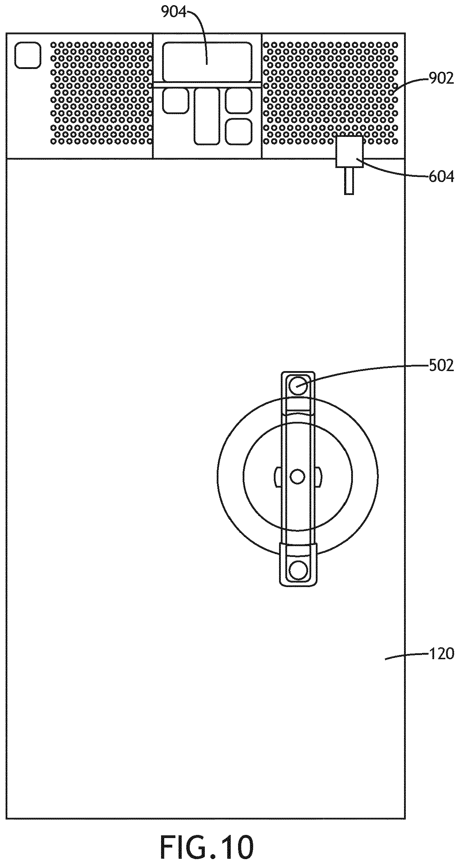

The electronically actuated linear actuator latch mechanism 122 is (a) installed in or on one of the doors 120 or (b) installed within the aircraft 100 in proximity to the door 120 (e.g., in a housing 902 of the door 120, as shown in FIG. 10), wherein the electronically actuated linear actuator latch mechanism 122 causes the door 120 to be in a latched state and an unlatched state. In some embodiments, the electronically actuated linear actuator latch mechanism 122 may be a linear solenoid actuator latch mechanism. The electronically actuated linear actuator latch mechanism 122 may be or may include a linear actuator (e.g., a linear solenoid 604) configured to extend and retract linearly, based at least on electronic signals received from the controller 112 and/or the computing device 102, such that the linear actuator latch mechanism 122 latches or unlatches the door 120, for example, as shown in FIGS. 6-13. In some embodiments, the electronically actuated
linear actuator latch mechanism 122 can be actuated manually by hand or electrically via the linear actuator (e.g., a linear solenoid 604). The linear actuator (e.g., a linear solenoid 604) may also function as a sensor to detect the state of the latch. In some embodiments, the electronically actuated linear actuator latch mechanism 122 may also include a pivot 702, a pivot arm 706, a first latch rod 704A, and/or a second latch rod 704B, such as illustrated and described with respect to embodiments depicted in FIGS. 5-9. For example, the pivot arm 706 may pivot about the pivot 702 when the linear actuator (e.g., a linear solenoid 604) extends or retracts. A first end of the pivot arm 706 may engage with the manual latch actuator 602. A second end of the pivot arm 706 may be coupled to the first latch rod 704A and the second latch rod 704B, such that the first latch rod 704A and the second latch rod 704B latch the door 120 when the linear actuator (e.g., a linear solenoid 604) is in a first state and unlatch the door 120 when the linear actuator (e.g., a linear solenoid 604) is in a second state. In some embodiments, such as shown in FIGS. 10-11, the electronically actuated linear actuator latch mechanism 122 may be installed outside of the door 120 (e.g., in a housing abutting and/or in proximity to the door 120) such that a rod portion of the electronically actuated linear actuator latch mechanism 122 may engage with the door 120 in the latched state and disengage with the door 120 in the unlatched state. In some embodiments, the electronically actuated linear actuator latch mechanism 122 may be considered to be a secondary latch mechanism and/or an independent latch mechanism.

The controller 112 may include at least one antenna 114, at least one processor 116, and/or at least one memory 118, which may be communicatively coupled. The at least one processor 116 may be implemented as any suitable type and number of processors. For example, the at least one processor 116 may include at least one general purpose processor (e.g., at least one central processing unit (CPU)), at least one digital signal processor (DSP), at least one application specific integrated circuit (ASIC), and/or at least one field-programmable gate array (FPGA). The at least one processor 116 may be configured to perform (e.g., collectively perform if more than one processor) any or all of the operations disclosed throughout. The processor 116 may be configured to run various software and/or firmware applications and/or computer code stored (e.g., maintained) in a non-transitory computer-readable medium (e.g., memory 118) and configured to execute various instructions or operations. For example, the controller 112 may be communicatively coupled (e.g., wiredly communicatively coupled or wirelessly communicatively coupled via the antenna 114) with the computing device 102, the at least one linear actuator latch mechanism 122, and/or the at least one primary latch mechanism sensor 124, at any given time. For example, the controller 112 may output data received from the at least one linear actuator latch mechanism 122, and/or the at least one primary latch mechanism sensor 124 to the computing device 102. For example, the controller 112 may receive instructions or signals from the computing device 102 and cause one, some, or all of the at least one door 120 to be in latched state or an unlatched state.

The computing device 102 may include at least one antenna 104, at least one user interface 106, at least one processor 108, and at least one memory 110, which may be communicatively coupled. The computing device 102 may be any suitable computing device, such as a vetronics computing device (e.g., an avionics computing device) or a mobile computing device (e.g., a laptop computing device, a phone computing device, and/or a tablet computing device). For example, the computing device 102 may be a hand-held computing device used by crew members to check a status of one, some, all of latch/unlatched states of doors 120 in the aircraft 100 and to change one, some, all of latch/unlatched states of doors 120 in the aircraft 100. The at least one processor 108 may be implemented as any suitable type and number of processors. For example, the at least one processor 108 may include at least one general purpose processor (e.g., at least one central processing unit (CPU)), at least one digital signal processor (DSP), at least one application specific integrated circuit (ASIC), and/or at least one field-programmable gate array (FPGA). The at least one processor 108 may be configured to perform (e.g., collectively perform if more than one processor) any or all of the operations disclosed throughout. The processor 108 may be configured to run various software and/or firmware applications and/or computer code stored (e.g., maintained) in a non-transitory computer-readable medium (e.g., memory 110) and configured to execute various instructions or operations. For example, the computing device 102 may be communicatively coupled (e.g., wiredly communicatively coupled or wirelessly communicatively coupled via the antenna 104; e.g., directly communicatively coupled and/or communicatively coupled via an intermediate communicatively coupled device) with the controller 112, the at least one linear actuator latch mechanism 122, and/or the at least one primary latch mechanism sensor 124, at any given time. The user interface 106 may be and/or may include at least one display, at least one microphone, at least one speaker, at least one vibration, at least one light, at least one button, and/or at least one camera, and the user interface 106 interface may be configured to interface with a user to receive user inputs and to present information to the user. For example, the computing device 102 may send and receive data to and from the controller 112, the actuator latch mechanism 122, and/or the at least one primary latch mechanism sensor 124 to the computing device 102. For example, the computing device 102 may receive status information from the controller 112, the actuator latch mechanism 122, and/or the at least one primary latch mechanism sensor 124 and output instructions or signals to cause one, some, or all of the at least one linear actuator latch mechanism 122 to be in latched state or an unlatched state.

The computing device 102 is configured to: determine whether the door 120 is in the latched state or the unlatched state; and cause the electronically actuated linear actuator latch mechanism 122 to switch from a determined state to a different state of the latched state and the unlatched state (e.g., by controlling the electronically actuated linear actuator latch mechanism 122).

For example, the computing device 102 may be configured to: present, to a user, information related to the determined state of the door 120; and receive a user input instructing the computing device 102 to cause the electronically actuated linear actuator latch mechanism 122 to switch from the determined state to the different state of the latched state and the unlatched state. For example, the computing device 102 may be configured to: present, to the user via the user interface 106, information related to a detected state of the primary latch mechanism 502.

According to the invention, the computing device 102 is configured to: obtain aircraft state data from another computing device (e.g., similarly configured to computing device 102) onboard the aircraft; and cause the electronically actuated linear actuator latch mechanism 122 to be in the latched state based at least on the aircraft state data. The aircraft state data is associated with at least one of taxi, takeoff, turbulence, or landing.

In some embodiments, the computing device 102 may be configure to receive status information associated with any number of doors 120. For example, a second door 120 may be installed within the aircraft and a second electronically actuated linear actuator latch mechanism 122 may be (a) installed in or on the second door 120 or (b) installed within the aircraft in proximity to the second door 120, wherein the second electronically actuated linear actuator latch mechanism 122 may cause the second door 120 to be in a second latched state and to cause the second door 120 to be in a second unlatched state. The computing device 102 may be configured to: determine whether the second electronically actuated linear actuator latch mechanism 122 is in the second latched state or the second unlatched state; and cause the second electronically actuated linear actuator latch mechanism 122 to switch from a second determined state to a different second state of the second latched state and the second unlatched state. In some embodiments, the computing device 102 may be further configured to control a state of the electronically actuated linear actuator latch mechanism 122 independent of controlling a second state of the second electronically actuated linear actuator latch mechanism 122.

In some embodiments, the computing device's 102 causing of the electronically actuated linear actuator latch mechanism 122 to switch from the determined state to the different state of the latched state and the unlatched state may be manually overridable by a user.

In some embodiments, the computing device 102 may be wirelessly communicatively coupled to the electronically actuated linear actuator latch mechanism 122.

In some embodiments, the computing device 102 may be further configured to: cause the electronically actuated linear actuator latch mechanism 122 to be in the unlatched state while the door 120 is open.

As will be appreciated from the above, embodiments of the inventive concepts disclosed herein are directed to a system including a door and an electronically actuated linear actuator latch mechanism configured to cause the door to be in a latched state and to cause the door to be in an unlatched state.

As used throughout and as would be appreciated by those skilled in the art, "at least one non-transitory computer-readable medium" may refer to as at least one non-transitory computer-readable medium (e.g., memory, storage, or a combination thereof; e.g., at least one computer-readable medium implemented as hardware; e.g., at least one non-transitory processor-readable medium, at least one memory (e.g., at least one nonvolatile memory, at least one volatile memory, or a combination thereof; e.g., at least one random-access memory, at least one flash memory, at least one read-only memory (ROM) (e.g., at least one electrically erasable programmable read-only memory (EEPROM)), at least one on-processor memory (e.g., at least one on-processor cache, at least one on-processor buffer, at least one on-processor flash memory, at least one on-processor EEPROM, or a combination thereof), or a combination thereof), at least one storage device (e.g., at least one hard-disk drive, at least one tape drive, at least one solid-state drive, at least one flash drive, at least one readable and/or writable disk of at least one optical drive configured to read from and/or write to the at least one readable and/or writable disk, or a combination thereof), or a combination thereof).

As used throughout, "at least one" means one or a plurality of; for example, "at least one" may comprise one, two, three, ..., one hundred, or more. Similarly, as used throughout, "one or more" means one or a plurality of; for example, "one or more" may comprise one, two, three, ..., one hundred, or more. Further, as used throughout, "zero or more" means zero, one, or a plurality of; for example, "zero or more" may comprise zero, one, two, three, ..., one hundred, or more.

From the above description, it is clear that the inventive concepts disclosed herein are well adapted to carry out the objects and to attain the advantages mentioned herein as well as those inherent in the inventive concepts disclosed herein. While presently preferred embodiments of the inventive concepts disclosed herein have been described for purposes of this disclosure, it will be understood that numerous changes may be made which will readily suggest themselves to those skilled in the art and which are accomplished within the broad scope and coverage of the inventive concepts disclosed and claimed herein.

## Claims

1. A system, comprising:
an aircraft galley of an aircraft (100);
a door (120) installed within the aircraft galley of the aircraft; wherein the door is an aircraft galley insert oven door; and
an electronically actuated linear actuator latch mechanism (122) a) installed in or on the door or b) configured to be
installed within the aircraft in proximity to the door, wherein the electronically actuated linear actuator latch mechanism is configured to cause the door to be in a latched state and to cause the door to be in an unlatched state; and
a computing device (102) comprising at least one processor, the computing device communicatively coupled to the electronically actuated linear actuator latch mechanism, wherein the computing device is configured to: determine whether the door is in the latched state or the unlatched state, and cause the door to switch from a determined state to a different state of the latched state and the unlatched state; obtain aircraft state data associated with at least one of taxi, takeoff, turbulence, or landing; and cause the door to be in the latched state based at least on the aircraft state data.

2. The system of claim 1, wherein the electronically actuated linear actuator latch mechanism is a linear solenoid actuator latch mechanism.

3. The system of claim 1 or 2, wherein the computing device includes a user interface, wherein the computing device is further configured to: present, to a user, information related to the determined state of the door; and receive a user input instructing the computing device to cause the door to switch from the determined state to the different state of the latched state and the unlatched state.

4. The system of claim 3, further comprising a primary latch mechanism and a primary latch mechanism sensor configured to detect whether the primary latch mechanism is in a primary latch latched state or a primary latch unlatched state, the primary latch mechanism (a) installed in or on the door or (b) configured to be installed within the aircraft in proximity
to the door, the primary latch mechanism sensor communicatively coupled to the computing device, wherein the computing device is further configured to: present, to the user, information related to a detected state of the primary latch mechanism.

5. The system of claims 3 or 4, further comprising a second door (120) installed within the aircraft galley of
the aircraft and a second electronically actuated linear actuator latch mechanism (122) a) installed in or on the second door or b) configured to be installed within the aircraft in proximity to
the second door, wherein the second electronically actuated linear actuator latch mechanism is configured to cause the second door to be in a second latched state and to cause the second door to be in a second unlatched state, wherein the computing device is configured to: determine whether the second door is in the second latched state or the second unlatched state; and cause the second door to switch from
a second determined state to a different second state of the second latched state and the second unlatched state.

6. The system of claim 5, wherein the computing device is further configured to control a state of the door independent of controlling a second state of the second door.

7. The system of any of claims 3 to 6, wherein the computing device's causing of the door to switch from the determined state to the different state of the latched state and the unlatched state is manually overridable by a user.

8. The system of any of claims 3 to 7, wherein the computing device is wirelessly communicatively coupled to the electronically actuated linear actuator latch mechanism.

9. The system of any of claims 3 to 8, wherein the computing device is further configured to: cause the door to be in the unlatched state while the door is open.

## Patentansprüche

1. System, umfassend:
eine Flugzeug-Bordküche eines Flugzeugs (100);
eine Tür (120), die in der Flugzeug-Bordküche des Flugzeugs installiert ist; wobei die Tür eine Flugzeug-Bordküchen-Einbauofentür ist; und
einen elektronisch betätigten linearen Aktuatorsperrmechanismus (122), a) der in oder an der Tür installiert ist oder b) dazu konfiguriert ist, innerhalb des Flugzeugs in der Nähe der Tür installiert zu werden, wobei der elektronisch betätigte lineare Aktuatorsperrmechanismus dazu konfiguriert ist, zu veranlassen, dass sich die Tür in einem verriegelten Zustand befindet, und zu veranlassen, dass sich die Tür in einem entriegelten Zustand befindet; und
eine Rechenvorrichtung (102), die mindestens einen Prozessor umfasst, wobei die Rechenvorrichtung kommunikativ mit dem elektronisch betätigten linearen Aktuatorsperrmechanismus gekoppelt ist, wobei die Rechenvorrichtung zu Folgendem konfiguriert ist: Bestimmen, ob sich die Tür im verriegelten Zustand oder im entriegelten Zustand befindet, und Veranlassen, dass die Tür von einem bestimmten Zustand in einen anderen Zustand des verriegelten Zustands und des entriegelten Zustands wechselt; Erhalten von Flugzeugzustandsdaten, die mindestens einem der Zustände Rollen, Start, Turbulenzen oder Landung zugeordnet sind; und Veranlassen, dass sich die Tür mindestens basierend auf den Flugzeugzustandsdaten im verriegelten Zustand befindet.

2. System nach Anspruch 1, wobei der elektronisch betätigte lineare Aktuatorsperrmechanismus ein linearer Solenoidaktuatorsperrmechanismus ist.

3. System nach Anspruch 1 oder 2, wobei die Rechenvorrichtung eine Benutzerschnittstelle beinhaltet, wobei die Rechenvorrichtung ferner zu Folgendem konfiguriert ist: einem Benutzer Informationen in Bezug auf den bestimmten Zustand der Tür anzuzeigen; und eine Benutzereingabe zu empfangen, die die Rechenvorrichtung anweist, zu veranlassen, dass die Tür von dem bestimmten Zustand in den anderen Zustand des verriegelten Zustands und des entriegelten Zustands wechselt.

4. System nach Anspruch 3, ferner umfassend einen primären Sperrmechanismus und einen primären Sperrmechanismus-Sensor, der dazu konfiguriert ist, zu erfassen, ob sich der primäre Sperrmechanismus in einem Zustand befindet, in dem die primäre Sperre verriegelt ist, oder in einem Zustand, in dem die primäre Sperre entriegelt ist, wobei der primäre Sperrmechanismus (a) in oder an der Tür installiert ist oder (b) dazu konfiguriert ist, innerhalb des Flugzeugs in der Nähe der Tür installiert zu werden, wobei der primäre Sperrmechanismus-Sensor kommunizierend mit der Rechenvorrichtung gekoppelt ist, wobei die Rechenvorrichtung ferner zu Folgendem konfiguriert ist: dem Benutzer Informationen in Bezug auf einen erfassten Zustand des primären Sperrmechanismus zu anzuzeigen.

5. System der Ansprüche 3 oder 4, ferner umfassend eine zweite Tür (120), die in der Flugzeug-Bordküche installiert ist, und einen zweiten elektronisch betätigten linearen Aktuatorsperrmechanismus (122), der a) in oder an der zweiten Tür installiert ist oder b) dazu konfiguriert ist, in dem Flugzeug in der Nähe der zweiten Tür installiert zu werden, wobei der zweite elektronisch betätigte lineare Aktuatorsperrmechanismus dazu konfiguriert ist, zu veranlassen, dass sich die zweite Tür in einem zweiten verriegelten Zustand befindet, und zu veranlassen, dass sich die zweite Tür in einem zweiten entriegelten Zustand befindet, wobei die Rechenvorrichtung zu Folgendem konfiguriert ist: Bestimmen, ob sich die zweite Tür in dem zweiten verriegelten Zustand oder dem zweiten entriegelten Zustand befindet; und Veranlassen, dass die zweite Tür von einem zweiten bestimmten Zustand in einen anderen zweiten Zustand des zweiten verriegelten Zustands und des zweiten entriegelten Zustands wechselt.

6. System nach Anspruch 5, wobei die Rechenvorrichtung ferner dazu konfiguriert ist, einen Zustand der Tür unabhängig von der Steuerung eines zweiten Zustands der zweiten Tür zu steuern.

7. System nach einem der Ansprüche 3 bis 6, wobei das Veranlassen der Rechenvorrichtung, dass die Tür von dem bestimmten Zustand in den anderen Zustand des verriegelten Zustands und des entriegelten Zustands wechselt, von einem Benutzer manuell überschrieben werden kann.

8. System nach einem der Ansprüche 3 bis 7, wobei die Rechenvorrichtung drahtlos kommunizierend mit dem elektronisch betätigten linearen Aktuatorsperrmechanismus gekoppelt ist.

9. System nach einem der Ansprüche 3 bis 8, wobei die Rechenvorrichtung ferner zu Folgendem konfiguriert ist: Veranlassen, dass sich die Tür im entriegelten Zustand befindet, während die Tür offen ist.

## Revendications

1. Système, comprenant :
une cuisine d'aéronef d'un aéronef (100) ;
une porte (120) installée à l'intérieur de la cuisine d'aéronef de l'aéronef ; dans lequel la porte est une porte de four à insert pour la cuisine d'aéronef ; et
un mécanisme de verrouillage à actionneur linéaire à commande électronique (122) a) installé dans ou sur la porte ou b) configuré pour être installé à l'intérieur de l'aéronef à proximité de la porte, dans lequel le mécanisme de verrouillage à actionneur linéaire à commande électronique est configuré pour amener la porte à être dans un état verrouillé et pour amener la porte à être dans un état déverrouillé ; et
un dispositif informatique (102) comprenant au moins un processeur, le dispositif informatique étant couplé de manière communicative au mécanisme de verrouillage à actionneur linéaire à commande électronique, dans lequel le dispositif informatique est configuré pour : déterminer si la porte est dans l'état verrouillé ou dans l'état déverrouillé, et amener la porte à passer d'un état déterminé à un état différent de l'état verrouillé et de l'état déverrouillé ; obtenir des données d'état d'aéronef associées à au moins l'un des états suivants : roulage, décollage, turbulence ou atterrissage ; et amener la porte à être dans l'état verrouillé sur la base au moins des données d'état d'aéronef.

2. Système selon la revendication 1, dans lequel le mécanisme de verrouillage à actionneur linéaire à commande électronique est un mécanisme de verrouillage à actionneur à solénoïde linéaire.

3. Système selon la revendication 1 ou 2, dans lequel le dispositif informatique comprend une interface utilisateur, dans lequel le dispositif informatique est également configuré pour : présenter, à un utilisateur, des informations relatives à l'état déterminé de la porte ; et recevoir une entrée utilisateur ordonnant au dispositif informatique d'amener la porte à passer de l'état déterminé à l'état différent de l'état verrouillé et de l'état déverrouillé.

4. Système selon la revendication 3, comprenant également un mécanisme de verrouillage primaire et un capteur de mécanisme de verrouillage primaire configuré pour détecter si le mécanisme de verrouillage primaire est dans un état de verrouillage primaire verrouillé ou un état de verrouillage primaire déverrouillé, le mécanisme de verrouillage primaire (a) est installé dans ou sur la porte ou (b) configuré pour être installé dans l'aéronef à proximité de la porte, le capteur de mécanisme de verrouillage primaire est couplé de manière communicative au dispositif informatique, dans lequel le dispositif informatique est également configuré pour : présenter, à l'utilisateur, des informations relatives à un état détecté du mécanisme de verrouillage primaire.

5. Système selon les revendications 3 ou 4, comprend également une seconde porte (120) installée à l'intérieur de la cuisine d'aéronef et un second mécanisme de verrouillage à actionneur linéaire à commande électronique (122) a) installé dans ou sur la seconde porte ou b) configuré pour être installé à l'intérieur de l'aéronef à proximité de la seconde porte, dans lequel le second mécanisme de verrouillage à actionneur linéaire à commande électronique est configuré pour amener la seconde porte à être dans un second état verrouillé et pour amener la seconde porte à être dans un second état déverrouillé, dans lequel le dispositif informatique est configuré pour : déterminer si la seconde porte est dans le second état verrouillé ou le second état déverrouillé ; et amener la seconde porte à passer d'un second état déterminé à un second état différent du second état verrouillé et du second état déverrouillé.

6. Système selon la revendication 5, dans lequel le dispositif informatique est également configuré pour commander un état de la porte indépendamment de la commande d'un second état de la seconde porte.

7. Système selon l'une quelconque des revendications 3 à 6, dans lequel le fait que le dispositif informatique provoque le passage de la porte de l'état déterminé à l'état différent de l'état verrouillé et de l'état déverrouillé peut être annulé manuellement par un utilisateur.

8. Système selon l'une quelconque des revendications 3 à 7, dans lequel le dispositif informatique est couplé de manière communicative sans fil au mécanisme de verrouillage à actionneur linéaire à commande électronique.

9. Système selon l'une quelconque des revendications 3 à 8, dans lequel le dispositif informatique est également configuré pour : amener la porte à un état déverrouillé pendant que la porte est ouverte.
